# EUROPEAN PATENT SPECIFICATION

(11) **EP 0 819 383 B1**
(45) Date of publication and mention of the grant of the patent: **21.05.2003**
(21) Application number: 97112356.7
(22) Date of filing: 18.07.1997
(51) Int. Cl.: A23G 1/02, A23G 1/10, A23G 1/12

(54) **Method for the manufacturing of debacterialized cocoa mass from pretreated cocoa beans**
Verfahren zur Herstellung von Bakterien freigemachte Kakaomasse aus vorbehandelten Kakaobohnen
Procédé de fabrication de masse de cacao débactérialisée à partir de fèves de cacao prétraitées

(30) Priority: 18.07.1996 LT 9600112
(43) Date of publication of application: 21.01.1998
(73) Proprietor: AB Kraft Jacobs Suchard Lietuva, 3031 Kaunas (LT)
(72) Inventor: Dziugys, Steponas-Kazimieras, 3009 Kaunas (LT)
(74) Representative: Hansen, Bernd, Dr. Dipl.-Chem.

(56) References cited:
- EP-A- 0 518 054
- DE-A- 3 111 352
- DE-A- 3 331 445
- DE-A- 3 417 125
- FR-A- 2 550 060

## Description

The present invention relates to a method for the manufacture of debacterialized cocoa mass from pretreated cocoa beans and the use of this method for the simultaneous comminution and debacterialization of pretreated cocoa beans.

For the manufacture of cocoa mass from cocoa beans, the following steps are conventionally carried out: First, raw cocoa beans are cleaned by winnowing and then roasted at a temperature of 100-150°C, whereby the natural moisture level is very often reduced. Subsequently, the roasted cocoa beans are broken and winnowed again to remove the shells and to obtain the nibs. These nibs are finally preground in order to produce pretreated cocoa beans. These conventional steps result in pretreated cocoa beans which are subsequently ground to yield the final cocoa mass ("cocoa liquor").

The term "pretreated cocoa beans" as used in this specification refers to preground cocoa beans which, in addition, may have been subjected to one or more steps selected from cleaning, roasting, breaking and winnowing.

In the field of confectionery technology of cocoa products, such as in the chocolate production, cocoa bean processing and the manufacture of cocoa mass are very often confronted with the problem of contamination with bacteria, such as Salmonella. In order to decrease the bacterial count in the final product, various methods of debacterialization have been developed in food industry, mostly based on direct or indirect heating or mixed processes. An overview of these methods is given in K. L. Borowski, C. A. Ayres, "Thermobacteriology of UHT Processed Foods", Developments in Food Microbiology, 1982, pp. 119-152, Chipping Campden, UK. In this respect, "debacterialization" means a significant reduction of the bacterial count in the product in the sense of pasteurizing, but does not necessarily result in the complete removal of viable microorganisms as in sterilization.

It is known that bacteria may be killed by high vibration (V. Girdzijauskas, D. Vikonyte-Vasiljeviene, "Mikrobiologija", 1976, p. 84, Vilnius: "Mokslas"). It has also been proved by trials that the decrease of the bacterial count of milk can be achieved by a sinusoidal mechanical wave of a frequency 50-100 Hz for a period of 15 minutes (M. E. Juraczak, K. Babuchowski, Pietraszek, "Influence of Vibration on the Mikroflora of Milk", XX. International Dairy Congress, Vol. E (1978), pp. 184-185, Inst. of Dairy Ind., Warsaw, Poland).

On the other hand, JP 86-341199 describes a method for the debacterialization of cocoa mass by heating a mixture of cocoa mass with water up to a pasteurizing temperature in a heat exchanger and holding the mass at this temperature in a tubular scraper for a certain period of time. Other methods involve the repeated debacterialization of cocoa beans with superheated steam and subsequent sifting of the debacterialized product (JP 92-324098).

Although the known methods are said to accomplish a sufficient debacterialization of cocoa beans, they carry certain disadvantages. Some of the prior art processes have to employ a debacterialization temperature of 150-170°C. However, such temperatures very easily result in a burning of the cocoa mass, so that the desired aromatic substances are destroyed and the favorable taste is lost. If lower temperatures are used for debacterialization, additional methods have to be applied, or the duration of the treatment has to be increased, which is disadvantageous from an economical point of view and may also give rise to a loss of flavor-bearing substances.

According to another method disclosed in CH-A-650 646, cocoa mass is debacterialized by dispersing water in the raw material in a continuous flux shear zone and heating the dispersion by mechanical friction to a temperature higher than the boiling point of water, relaxing into vacuum and cooling in a thin layer method. The apparatus which is employed for such a mechanical friction treatment is described in DE-A-29 18 212: Cellular biological material is heated by friction to a temperature above the evaporation temperature of water for at most one second so that the cells burst open, substantially avoiding subjecting the material to thermal stress. However, the method and apparatus require finely ground material in order to achieve a fast heat transfer. Hence, the grinding and the debacterialization step must be conducted separately to obtain the final cocoa mass. Additionally, the method has sometimes been observed to be not so reliable from a technological point of view.

As a result, in order to obtain a debacterialized cocoa mass, the above methods are disadvantageous in that they require at least two separate process steps, namely one of grinding the pretreated cocoa beans and one of debacterializing them.

It is an object of the invention to provide a method for the manufacture of debacterialized cocoa mass from pretreated cocoa beans which is both cost-efficient and reliable and which allows for a sufficient degree of debacterialization without the substantial occurrence of burning.

According to the invention, this object is achieved by subjecting pretreated cocoa beans to at least one comminution step as set forth in the claims. The initial water content of the pretreated cocoa beans is more preferably at least 2.8 %, most preferably at least 3.0 % by weight. A temperature of at least 100°C and an initial water content of the pretreated cocoa beans of at least 2.5 % by weight are necessary to effect sufficient debacterialization. If either or both of the temperature and the moisture content are below 100°C and 2.5 % by weight, respectively, satisfactory debacterialization is deteriorated. On the other hand, if the initial water content is above 5 % by weight, the viscosity of the pretreated cocoa beans increases so that conveying it with an ordinary pump becomes difficult.

The comminution step in accordance with the invention may be carried out once or several times and as the first step after having obtained the pretreated cocoa beans or after one or more conventional comminution steps. Similarly, one or more conventional comminution steps may be provided between the single or groups of comminution steps according to the invention or as a final comminution step. However, from an economical point of view, it is preferred to carry out only comminution steps which are in accordance with the invention. Depending on the desired extent of comminution, it may be sufficient to conduct only one comminution step. However, in practice, two, three, four or sometimes even more of such steps are performed. Up to four steps, however, are preferred under cost aspects.

In a preferred embodiment, the temperature in the comminution step according to the invention is within the range of 120 to 145°C. This temperature range allows for an improved debacterialization while avoiding burning or loss of flavor through too high a temperature.

The temperature employed in the method of the invention may be generated by mechanical friction in a grinding means or, optionally, by heating the grinding means, e.g. by running hot water or steam through the jackets of the grinding means.

Usually, there will be no need to cool the grinding means. However, if it is applicable to reach a certain temperature or meet the temperature limits of the invention, cooling of the grinding means may be carried out as well.

The water content before any of the comminution steps in accordance with the invention may be achieved by admixing water to the pretreated cocoa beans before the specific comminution step. Water may be added once before the series of comminution steps or separately before one or more of each of the comminution steps. However, it is essential to the invention that the water content of the pretreated cocoa beans in a comminution step according to the invention is within the range of 2.5 to 5 %, more preferably 2.8 to 5 %, most preferably 3.0 to 5 % by weight. Therefore, if the water content after pretreating the cocoa beans is within this range, it may not be necessary at all to admix additional water.

Due to the viscosity increase that occurs when water is added to the pretreated cocoa beans, it is preferable to use a high efficiency mixer for the addition of water.

Also, it is preferable to preheat the pretreated cocoa beans to at least 100°C before the comminution step according to the invention. This reduces the viscosity of the pretreated cocoa beans and renders the comminution step according to the invention more effective.

The comminution step according to the invention is carried out in a ball mill, and more preferably in an agitated ball mill. Such an agitated ball mill may comprise a rotating agitator shaft with (perforated) disks, rings or pins perpendicularly provided on the shaft. If an agitated ball mill is used, it is preferred to run it at a peripheral speed resulting in a characteristic impact frequency of the balls on the plates, rings or pins of at least 40 Hz, more preferably at least 60 Hz.

The comminution steps according to the invention may be carried out batchwise or continuously, however, it may be preferable to run the process in a continuous mode. The duration of the treatment may be chosen in accordance with the specific requirements of the batch of cocoa beans used, for instance the initial bacterial count or the desired final bacterial count as well as the fineness of the resulting cocoa mass. The residence time of one comminution step according to the invention in a continuous-type ball mill may typically be in the order of 5 min. or more, e.g. 5 to 10 min.

Further to comminuting and debacterializing the pretreated cocoa beans, the cocoa mass obtained after comminution may be dried according to its purpose of use. For instance, for pressing the cocoa mass to produce cocoa butter or cocoa powder, it may be necessary to reduce the moisture content of the cocoa mass, whereas drying may be optional for producing cocoa mass to be used in the manufacture of chocolate. If drying of the cocoa mass after comminution is carried out, it may be preferable to allow the cocoa mass to cool under vacuum during the drying step. Applying a vacuum to the cocoa mass will both remove water as well as cool down the cocoa mass through the evaporation effect of water, thus being a preferred embodiment of the invention.

The following non-limiting examples will illustrate the invention in more detail:

### Examples 1 to 7:

Cocoa beans having a specific Total Viable Count (TVC) are roasted at a predetermined temperature which results in a first reduction of the TVC. Then, the cocoa beans are crushed and winnowed in a usual manner to obtain cocoa nibs and finally ground into a pretreated mass in a conventional pregrinder. Next, water is admixed to the pretreated cocoa beans using a stainless steel dynamic in-line mixer (type RM2-50; GTA) to accomplish a predetermined water content of the pretreated cocoa beans. In a conventional steam heating vessel with agitator, the pretreated cocoa beans are preheated to a specific temperature and introduced at a predetermined flow rate in a first agitated ball mill (ball mill 1) for comminution within a residence time of 6-7 min. The ball mill employed in the examples (type 292C; Heidenauer) comprises an agitator shaft and horizontal plates running at a rotational speed of 960 rpm. The intermediate material passes to a second agitated ball mill (ball mill 2) of the same type and is again comminuted using the same milling parameters. Finally, the mass is cooled under vacuum in a storage tank, and the final TVC is determined. The specific processing conditions of the Examples as well as the results in terms of the TVC are given below in Table 1.

It can be seen from the resulting TVC values being below 1000 cfu/g (colony forming units per gram) that the cocoa mass obtained in the examples according to the invention is debacterialized in an efficient way to such a degree that it is suitable for the subsequent use in confectionery etc. Moreover, it can be seen that an initial water content of the pretreated cocoa beans (before ball mill 1) of 3 % or more by weight yields a further reduction of the TVC and, thus, is more preferable.

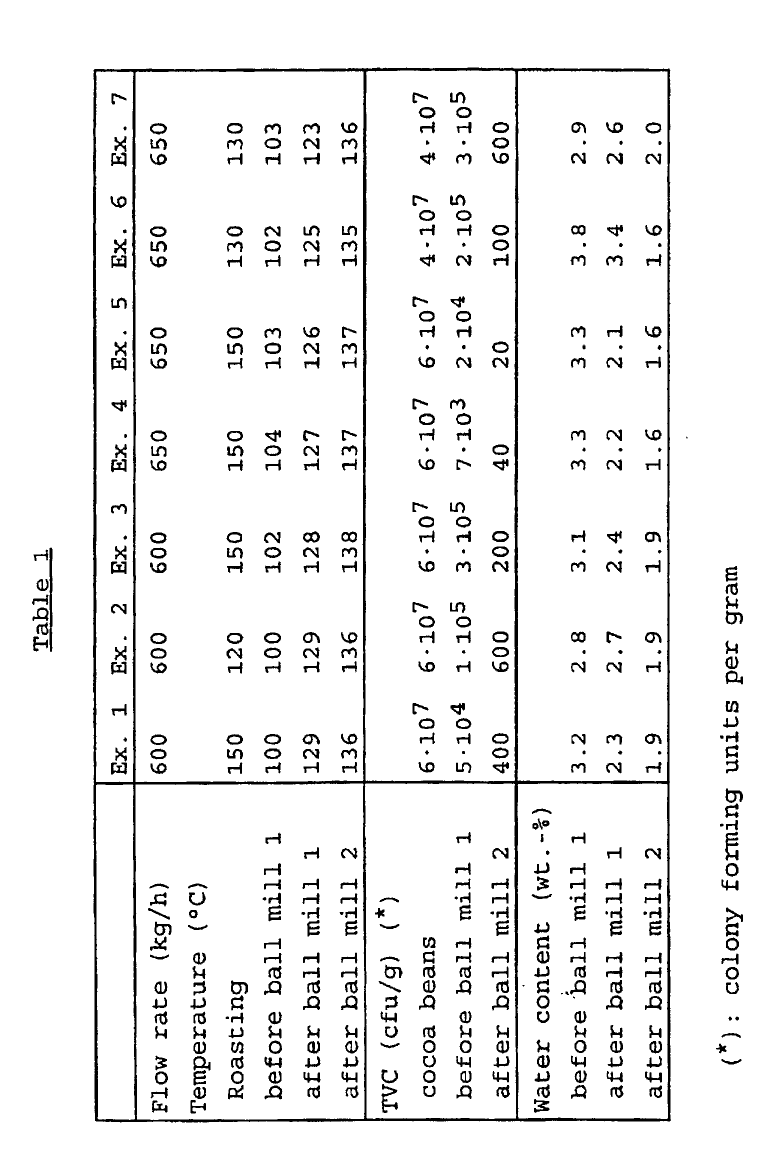

## Claims

1. A method for the manufacture of debacterialized cocoa mass from pretreated cocoa beans comprising subjecting said pretreated cocoa beans to at least one comminution step at a temperature of at least 100°C and at an initial water content of the pretreated cocoa beans of 2.5 to 5 % by weight, whereby said comminution step is carried out in a ball mill.

2. The method according to claim 1, wherein said temperature iswithin the range of 120 to 145°C.

3. The method according to claims 1 or 2, wherein said temperature is achieved by mechanical friction.

4. The method according to one or more of the preceding claims, wherein said initial water content is achieved by admixing water to the pretreated cocoa beans before said at least one comminution step.

5. The method according to claim 4, wherein said admixing of water is carried out using a high efficiency mixer.

6. The method according to one or more of the preceding claims, wherein the pretreated cocoa beans are preheated to at least 100°C before said at least one comminution step.

7. The method according to one or more of the preceding claims, wherein said at least one comminution step is carried out in.

8. The method according to claim 7, wherein the agitated ball mill is run at a characteristic impact frequency of at least 40 Hz.

9. The method according to one or more of the preceding claims, which further comprises the step of drying the cocoa mass after the comminution step.

10. The method according to claim 9, wherein said cocoa mass is allowed to cool under vacuum during said drying step.

11. Use of the method according to one or more of the preceding claims for the simultaneous comminution and debacterialization of pretreated cocoa beans.

## Patentansprüche

1. Verfahren zur Herstellung von entbakterialisierter Kakaomasse aus vorbehandelten Kakaobohnen, umfassend: Unterwerfen der vorbehandelten Kakaobohnen mindestens einem Zerkleinerungsschritt bei einer Temperatur von mindestens 100°C und bei einem Anfangswassergehalt der vorbehandelten Kakaobohnen von 2,5 bis 5 Gew.-%, wobei der Zerkleinerungsschritt in einer Kugelmühle durchgeführt wird.

2. Verfahren nach Anspruch 1, wobei die Temperatur im Bereich von 120 bis 145°C liegt.

3. Verfahren nach Anspruch 1 oder Anspruch 2, wobei die Temperatur durch mechanische Reibung erreicht wird.

4. Verfahren nach einem oder mehreren der vorangehenden Ansprüche, wobei der Anfangswassergehalt durch Zumischen von Wasser vor dem mindestens einen Zerkleinerungsschritt zu den vorbehandelten Kakaobohnen erreicht wird.

5. Verfahren nach Anspruch 4, wobei das Zumischen von Wasser unter Verwendung eines Mischers mit hoher Leistung durchgeführt wird.

6. Verfahren nach einem oder mehreren der vorangehenden Ansprüche, wobei die vorbehandelten Kakaobohnen vor dem mindestens einen Zerkleinerungsschritt bei mindestens 100°C vorerhitzt werden.

7. Verfahren nach einem oder mehreren der vorangehenden Ansprüche, wobei der mindestens eine Zerkleinerungsschritt in einer Rührkugelmühle durchgeführt wird.

8. Verfahren nach Anspruch 7, wobei die Rührkugelmühle mit einer charakteristischen Stoßsequenz von mindestens 40 Hz betrieben wird.

9. Verfahren nach einem oder mehreren der vorangehenden Ansprüche, das außerdem den Schritt eines Trocknens der Kakaomasse nach dem Zerkleinerungsschritt umfaßt.

10. Verfahren nach Anspruch 9, wobei die Kakaomasse während des Trocknungsschritts im Vakuum trocknen gelassen wird.

11. Verwendung des Verfahren nach einem oder mehreren der vorangehenden Ansprüche für die gleichzeitige Zerkleinerung und Entbakterialisierung von vorbehandelten Kakaobohnen.

## Revendications

1. Procédé de fabrication d'une masse de cacao dont les bactéries ont été éliminées à partir de fèves de cacao prétraitées comprenant l'exposition desdites fèves de cacao prétraitées à au moins une étape de pulvérisation à une température d'au moins 100°C et à une teneur en eau initiale des fèves de cacao prétraitées de 2,5 à 5 % en masse, où ladite étape de pulvérisation est réalisée dans un broyeur à boulets.

2. Procédé selon la revendication 1 où ladite température est dans le domaine de 120 à 145°C.

3. Procédé selon la revendication 1 ou 2 où ladite température est obtenue par frottement mécanique.

4. Procédé selon une ou plusieurs des revendications précédentes où ladite teneur en eau initiale est obtenue par addition d'eau aux fèves de cacao prétraitées avant ladite ou lesdites étapes de pulvérisation.

5. Procédé selon la revendication 4 où ladite addition d'eau est réalisée au moyen d'un mélangeur à haute efficacité.

6. Procédé selon une ou plusieurs des revendications précédentes où les fèves de cacao prétraitées sont préchauffées à au moins 100°C avant ladite ou lesdites étapes de pulvérisation.

7. Procédé selon une ou plusieurs des revendications précédentes où ladite ou lesdites étapes de pulvérisation sont réalisées dans un broyeur à boulets agité.

8. Procédé selon la revendication 7 où le broyeur à boulets agité est actionné à une fréquence d'impacts caractéristique d'au moins 40 Hz.

9. Procédé selon une ou plusieurs des revendications précédentes qui comprend en outre l'étape de séchage de la masse de cacao après l'étape de pulvérisation.

10. Procédé selon la revendication 9 où ladite masse de cacao est mise à refroidir sous vide pendant ladite étape de séchage.

11. Utilisation du procédé selon une ou plusieurs des revendications précédentes pour pulvériser des fèves de cacao prétraitées et en éliminer simultanément les bactéries.
